# EUROPEAN PATENT SPECIFICATION

(11) **EP 3 894 709 B1**
(45) Date of publication and mention of the grant of the patent: **16.07.2025**
(21) Application number: 19823935.2
(22) Date of filing: 10.12.2019
(51) Int. Cl.: F04D 19/04, F04D 29/60, F16L 23/028

(54) **VACUUM PUMP**
VAKUUMPUMPE
POMPE À VIDE

(30) Priority: 13.12.2018 GB 201820337
(43) Date of publication of application: 20.10.2021
(73) Proprietor: Edwards Limited, Burgess Hill, Sussex RH15 9TW (GB)
(72) Inventor: PERRINO, Nicola, Burgess Hill Sussex RH15 9TW (GB); HORLER, Richard Glyn, Burgess Hill Sussex RH15 9TW (GB); LUCCHETTA, Emiliano, Burgess Hill Sussex RH15 9TW (GB); SMITH, Paul David, Burgess Hill Sussex RH15 9TW (GB)
(74) Representative: Totman, Clare Elizabeth
(86) International application number: PCT/GB2019/053491
(87) International publication number: WO 2020/120949

(56) References cited:
- EP-A1- 3 059 450
- DE-A1- 102004 012 677
- US-A1- 2009 068 011

## Description

The present invention relates to a vacuum pump for connecting to a vacuum apparatus and a vacuum system comprising a vacuum apparatus and such a vacuum pump.

Vacuum pumps known in the art comprise a housing wherein a rotor assembly is disposed within the housing and rotated by an electric motor. The rotor assembly comprises at least one rotor element interacting with a stator, wherein the stator is connected to the housing. Further, the housing comprises an inlet and an outlet, wherein due to interaction of the rotor element with the stator element upon rotation of the rotor assembly a gaseous medium is conveyed from the inlet to the outlet.

The majority of known vacuum pumps comprise a flange directly connected to the outer most end of the inlet side of the vacuum pump. Alternatively, so called cartridge pumps are known, wherein the flange is arranged on the opposite side to the inlet at the pump base, wherein the vacuum pump is almost completely inserted into a vacuum apparatus. With the flange the vacuum pump is connected to a vacuum apparatus.

However, in both possibilities the axial position of the vacuum pump with respect to the vacuum apparatus is fixed. The known vacuum pumps do not provide any freedom in design and simply provide the choice whether the pump is completely inserted into the vacuum apparatus or externally attached to it.

In particular, for portable vacuum apparatus such as point of use mass spectrometer systems, the size of the vacuum apparatus needs to be small requiring more degrees of freedom regarding the position of the vacuum pump with respect to the vacuum apparatus.

DE 10 2004 012677 describes a vacuum system to connect a vacuum pump to a vacuum apparatus. There, the vacuum pump comprises a flange surrounded by a collar, wherein a clamping ring provided between the collar and the flange of the vacuum pump fixes the axial position of the vacuum pump relative to the vacuum apparatus.

It is a subject of the present application to provide a vacuum pump providing the possibility for a small and compact design.

The technical problem is solved by a vacuum pump in accordance to claim 1 as well as a vacuum system in accordance to claim 10.

The vacuum pump in accordance to the present invention for connecting to a vacuum apparatus comprises a housing having a first end defining an inlet and a second end opposite to the first end. In particular, in the housing a rotor assembly is disposed comprising at least one rotor element wherein the rotor assembly is rotated by an electric motor. Further, the rotor element is interacting with at least one stator element connected to the housing in order to convey a gaseous medium from the inlet to an outlet.

Further, in accordance to the invention the vacuum pump comprises a collar to be connected to a vacuum apparatus. In particular, the collar is directly connected to the vacuum apparatus. The housing comprises at least one positioning element and also the collar comprising at least one positioning element for defining an axial position of the housing relative to the collar. This may provide the advantage that by tayloring the position of at least one positioning element, the axial position of the vacuum pump with respect to the collar can be adjusted. Since the collar is in particular directly connected to the vacuum apparatus, as a consequence also the axial position of the vacuum pump with respect to a vacuum apparatus can be adjusted accordingly.

Preferably the positioning element of the housing is arranged at the first end of the housing. However, the more the positioning element is shifted towards the second end of the housing, the more the vacuum pump is inserted into the vacuum apparatus. In particular, the positioning element is not arranged directly at the first end and also not arranged directly at the second end of the housing, but spaced apart from the first end and the second end which may provide the desired degree of freedom in design of the axial positon of the vacuum pump with respect to the vacuum apparatus.

According to the present invention the housing comprises more than one positioning element. The positioning elements are then distributed along an axial direction of the pump wherein each positioning element is spaced apart from the directly adjacent positioning elements. Since by the positioning elements the axial position of the vacuum pump is defined providing more than one positioning element at the housing of the vacuum pump, this may have the advantage that with one housing different axial positions can be realized without the necessity to rebuild or reconstruct the housing for each individual application of the vacuum pump. Additionally or alternatively, the collar comprises more than one positioning element distributed along an axial direction of the collar in order to define different axial positions in which the housing can be placed with respect to the collar, i. e. the vacuum apparatus. Preferably the positioning elements of the collar are also separated from each other wherein more preferably the separation of the positioning elements of the collar are identical to the separation of the positioning elements of the housing, in particular if both the housing and the collar comprise more than one positioning element. However, it is also possible to have different separations between the positioning elements of the housing and the collar. Different separation between positioning elements in the collar and positioning elements in the housing provides more relative positioning options than same spacing. Additionally or alternatively also the number of positioning elements of the collar and/or the housing can be equal or different.

This may provide the advantage that either by the positioning elements of the housing or the positioning elements of the collar, different axial positions of the vacuum pump with respect to the vacuum apparatus are feasible with one vacuum pump without the necessity to rebuild or reconstruct for each application.

Preferably the number of positioning elements of the housing and the number of positioning elements of the collar are identical. Alternatively the number of positioning elements of the housing and the number of positioning elements of the collar are different. More preferably one of the number of positioning elements of the housing or the number of positioning elements of the collar is one while the other is larger than one.

Preferably the positioning element is a circumferential groove. In particular, the circumferential groove is arranged at an outer surface of the housing and/or a radially inner surface of the collar. In particular the groove need not to be closed on all three sides but can also be open at one side. Thus, the groove can be built as abutment edge. The vacuum pump further comprises a snap ring, which is disposed in the groove of the housing and the groove of the housing simultaneously for engagement of the respective positioning elements. Thus, the axial position is defined by the position of the circumferential grooves of the housing and the collar, wherein the axial position is fixed by the snap ring. Further, the apparatus may comprise a face opposing the pump inlet face to further define the axial position. In particular, if a snap ring is employed the groove can be built as abutment edge. Then, assembling is performed by advancing the vacuum pump until the snap ring abuts against the abutment edge formed by the groove of the collar. This may provide the advantage that if the axial position of the vacuum pump with respect to the vacuum apparatus needs to be adapted, several positioning elements are provided at the housing and/or the collar, the snap ring will be arranged in another pair of opposing grooves of the housing and the collar.

Preferably, the collar comprises at least one set and preferably more than one set of through holes for receiving a screw for connecting the collar to a vacuum apparatus. Thus, each set of through holes may be adapted to a specific configuration of vacuum apparatus and its individual fastening configurations.

Thus, it may be possible that the collar can be connected to a larger number of different vacuum apparatus without the necessity to reconstruct or redesign the collar for each vacuum apparatus individually. In particular, one specific through hole might belong to more than one set, wherein each set differs at least by one through hole to cover different fastening configurations of different vacuum apparatus.

Preferably the vacuum pump comprises a centering ring arranged at the first end between the housing and the vacuum apparatus. The centering ring maintains a centered position of the vacuum pump with respect to the vacuum apparatus. Preferably, the centering ring has a circular cross-section. However, alternatively the centering ring may also have any other cross-section such as elliptic, rectangular or any other polygonal form in dependence on the form of the inlet of the vacuum pump and/or the port of the vacuum apparatus.

Preferably the centering ring is in direct contact with both the housing and the vacuum apparatus in order to provide a defined centered position.

Preferably the centering ring comprises a first radial abutment face wherein the first abutment face directly abuts against the housing to define a center position. In particular, the first abutment face abuts against a radial surface of the housing.

Preferably the centering ring comprises a second abutment face that directly abuts against a vacuum apparatus and in particular to a radial surface of the vacuum apparatus to maintain a centered position between the vacuum pump and the vacuum apparatus.

Preferably the radius of the first radial abutment face is different than the radius of the second radial abutment face. Thus, the diameter of the connection port of the vacuum apparatus can be adapted to the diameter of the inlet of the vacuum pump. This may provide the advantage that the centering ring may compensate for different inlet diameter of respective vacuum pumps and/or vacuum apparatus.

Preferably the centering ring may be provided in different lengths along the axial direction. Thus, for one vacuum pump to be connected to a certain vacuum apparatus the axial position can be adapted without any redesign of the vacuum pump.

Further, it is subject of the present invention to provide a vacuum system comprising a vacuum pump as previously described and a vacuum apparatus. Therein the vacuum apparatus might be any vessel, spectrometer or apparatus that requires the existence of a certain vacuum.

Preferably a sealing element is placed between the first end of the vacuum pump and the vacuum apparatus in order to provide a vacuum tight seal of the vacuum pump to the vacuum apparatus.

Specific embodiments of the present application will be described in the following with reference to the accompanied drawing.

The figures show:
- Figure 1: an explosion drawing of the vacuum pump in accordance to the present invention,
- Figure 2: a detailed view of the vacuum pump connected to a vacuum apparatus,
- Figure 3a-3c: different configurations of the vacuum system, and
- Figure 4: a details view of another embodiment of the positioning elements.

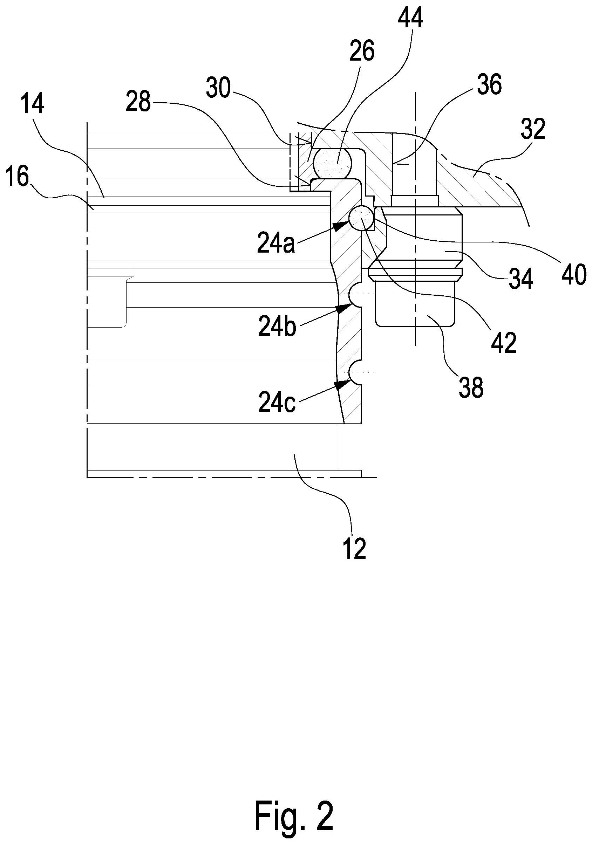

The vacuum pump 10 comprises a housing 12 with an inlet 14 arranged at a first end 16 of the housing 12 and an outlet 18 arranged at a second end 20 of the housing 12. At the outer surface 22 of the housing 12 three positioning elements are built as grooves 24a, 24b, 24c. Further, a centering ring 26 is arranged at the first end 16 of the housing 12. The centering ring 26 comprises a first radial abutment face 28 (figure 2) and a second radial abutment face 30, wherein the first abutment face 28 is in direct contact with the housing 12 of the vacuum pump 10 and the second abutment face 30 is in direct contact with an abutment face of the vacuum apparatus 32. Thus, by the centering ring 26 a centered position of the vacuum pump 10 with respect to the vacuum apparatus 32 is maintained.

Different distances between the housing 12 of the vacuum pump 10 and the vacuum apparatus 32 can be compensated by different centering rings 26 which have respectively different length along the axial direction of the pump in correspondence to the housing 12 of the vacuum pump 10 and the vacuum apparatus 32. Thus, even for the same vacuum pump 10 and the same vacuum apparatus 32 different axial positions can be chosen with selecting different centering rings having different length along the axial direction of the vacuum pump.

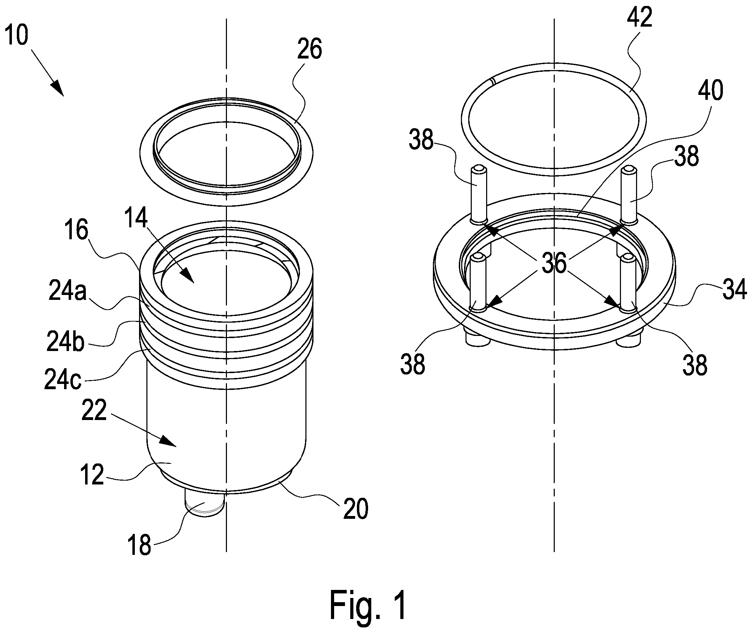

Further, the vacuum pump comprises a collar 34 wherein the collar 34 comprises in the example of figure 1 four through holes 36 to receive screws 38. However, the number and positions of the through holes and screws are not limited. In particular, the collar 34 may comprise more than one set of through holes 36 to be connected to different fastening configurations of different vacuum apparatuses 32. By the screws 32 the collar 34 is connected to the vacuum apparatus 32. The collar 34 comprises a groove 40 as positioning element. In particular the groove 40 of the collar need not to be closed on all three sides but can be also open at one side towards the inlet of the vacuum pump 10. Thus, the groove can be built as abutment edge. The groove 40 of the collar 34 is engaged with one of the grooves 24a, 24b, 24c of the housing 12 by a snap ring 42 in order to define the axial position of the vacuum pump 10 with respect to the vacuum apparatus 32. Assembling is performed by advancing the vacuum pump 10 into the collar 34 until the snap ring 42 abuts against the abutment edge 46, 48 formed by the groove 40.

As shown in figure 2, the snap ring 42 is placed simultaneously in the groove 40 of the collar 34 and the groove 24a of the housing 12.

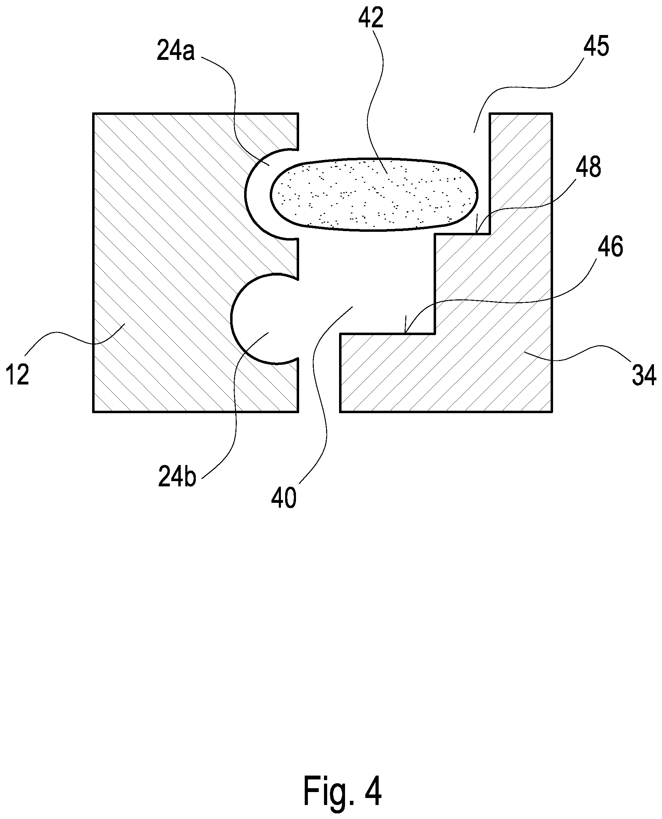

If the collar 34 comprises more than one positioning element, as shown in Fig. 4, then a first positioning element built by a first groove 40 has a first diameter and the second positioning element built by a second groove 45 has a second diameter. Therein, the first diameter is smaller than the second diameter. In particular, if more than two positioning elements are employed by the collar 34 then the diameter increases from one groove to the next in a direction from the second end 20 towards the first end 16. Of course, also the positing elements in the housing 12 may have different diameters alternatively or additionally. Preferably, the snap ring 42 then might have a different thickness in the radial direction to compensate for the different diameters of the positioning elements. This may have the advantage that upon inserting the vacuum pump into the collar 34, due to the decreasing diameter along the inserting direction, the respective snap ring 42 can be received by the respective groove 40, 45 to attach the vacuum pump 10 to the collar 34. Hereby in particular the groove 40, 45 comprises an open side forming an abutment edge 46, 48 facing against the inserting direction the snap ring 42 abuts against the abutment edge 46, 48 formed by the respective groove 40, 45 of the collar 34.

Due to the collar 34 with the screws 38, the vacuum pump 10 is fixed to the vacuum apparatus 32 wherein the axial position of the vacuum 10 with respect to the vacuum apparatus 32 is defined by the position of the respective grooves 24a, 24b, 24c and 40. The centered position between the vacuum pump 10 and the vacuum apparatus 32 is maintained by the centering ring 26 as describe above. Further, between the housing 12 of the vacuum pump 10 and the vacuum apparatus 32 a vacuum tight seal 44 is arranged to seal and maintain the vacuum in the vacuum apparatus and the vacuum pump.

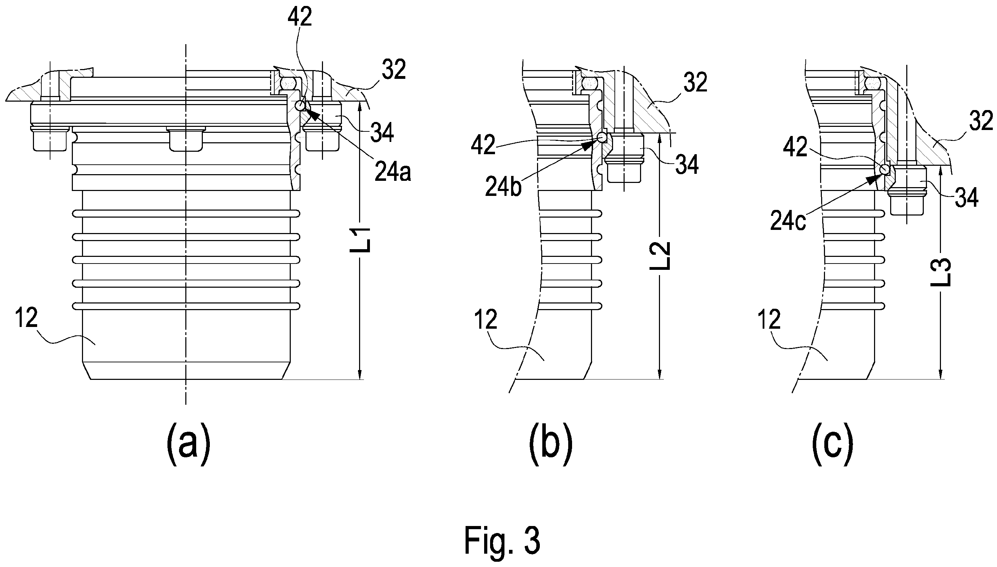

As shown, the housing 12 of the vacuum pump 10 comprises in the example of the figures three positioning elements built as grooves 24a, 24b, 24c. Thereby the number of the positioning elements and also the position of the positioning elements with respect to the housing 12 of the vacuum pump are not limited. Thus, a larger or smaller number of positioning elements can be employed and also the position of the positioning elements itself can be shifted along the axial axis of the vacuum pump 10 for example towards the second end 20. However, if the groove 40 of the collar 34 is engaged with a groove 24a, 24b, 24c of the housing 12, the axial position of the vacuum pump 12 with respect to different vacuum apparatus can be adapted providing a degree of freedom in design of the vacuum system. As shown in figures 3a - 3c protruding of the vacuum pump 10 from three exemplified vacuum apparatus 32, as denoted by the lengths L1 to L3, can be adapted by using different positioning elements, i.e. grooves 24a, 24b, 24c of the housing 12.

Thus, the housing 12 of the vacuum pump provides the possibility to adapt the axial position of the vacuum pump with respect to the vacuum apparatus in particular for different vacuum apparatus without the necessity to redesign or reconstruct the vacuum pump. Thus, one single pump can be provided for several different applications at once providing a high degree of freedom in the design of the respective vacuum systems and facilitate a compact and optimal design of the respective vacuum system in particular for portable vacuum application such as point of use mass spectrometer systems.

### Reference numbers:

- 10: vacuum pump
- 12: housing
- 14: inlet
- 16: first end
- 18: outlet
- 20: second end
- 22: outer surface
- 24a, 24b, 24c: grooves
- 26: centering ring
- 28: first radial abutment face
- 30: second radial abutment face
- 32: vacuum apparatus
- 34: collar
- 36: through holes
- 38: screws
- 40: groove
- 42: snap ring
- 44: seal
- 45: second groove
- 46, 48: abutment edge

## Claims

1. Vacuum pump for connecting to a vacuum apparatus, comprising a housing (12) having a first end (16) defining an inlet (14) and a second end (20) opposite to the first end (16),
a collar (34) to be connected to a vacuum apparatus (32),
wherein the housing (12) and the collar (34) comprising each at least one positioning element (24a, 24b, 24c, 40) for defining an axial position of the housing (12) relative to the collar (34),
**characterized in that**
the housing (12) and/or the collar (34) comprises more than one positioning element.

2. Vacuum pump according to claim 1, **characterized in that** the positioning element is a circumferential groove (24a, 24b, 24c, 40), wherein the vacuum pump (10) further comprises a snap ring (42) disposed in the groove (24a, 24b, 24c) of the housing (12) and a groove (40) of the collar (34) simultaneously for engagement of the respective positioning elements.

3. Vacuum pump according to claim 1 or 2, **characterized in that** the collar (34) comprises at least one set and preferably more than one set of through holes (36) for receiving a screw (38) for connecting the collar (34) to a vacuum apparatus.

4. Vacuum pump according to any of claims 1 to 3, **characterized by** a centering ring (26) arranged at the first end between the housing (12) and a vacuum apparatus (32).

5. Vacuum pump according to claim 4, **characterized in that** the centering ring (26) has an adaptable length in the axial direction of the vacuum pump in accordance to the connected vacuum apparatus, such that for a first vacuum apparatus the centering has a first axial length while for a second vacuum apparatus the centering has a second axial length.

6. Vacuum pump according to claim 4 or 5, **characterized in that** the centering ring (26) is in direct contact with both the housing (12) and the vacuum apparatus (32).

7. Vacuum pump according to any of claims 4 to 6, **characterized in that** the centering ring (26) comprises a first radial abutment face (28), wherein the first abutment face (28) directly abuts against the housing (12) to define a center position.

8. Vacuum pump according to claim 7, **characterized in that** the centering ring (26) comprises a second radial abutment face (30) that directly abuts against a vacuum apparatus (32).

9. Vacuum pump according to claim 8, **characterized in that** the radius of the first radial abutment face (30) is different than the radius of the second radial abutment face (32).

10. Vacuum system comprising a vacuum apparatus (32) and a vacuum pump (10) in accordance with any of claims 1 to 9.

11. Vacuum system according to claim 10, **characterized in that** a sealing element (44) is placed between the first end (16) of the vacuum pump (10) and the vacuum apparatus (32).

## Patentansprüche

1. Vakuumpumpe zum Verbinden mit einer Vakuumvorrichtung, umfassend:
ein Gehäuse (12) mit einem ersten Ende (16), das einen Einlass (14) definiert, und einem zweiten Ende (20) gegenüber dem ersten Ende (16),
einen Bund (34), der mit einer Vakuumvorrichtung (32) zu verbinden ist,
wobei das Gehäuse (12) und der Bund (34) jeweils mindestens ein Positionierelement (24a, 24b, 24c, 40) zum Definieren einer axialen Position des Gehäuses (12) relativ zum Bund (34) umfassen,
**dadurch gekennzeichnet, dass**
das Gehäuse (12) und/oder der Bund (34) mehr als Positionierelement umfassen.

2. Vakuumpumpe nach Anspruch 1, **dadurch gekennzeichnet, dass** das Positionierelement eine umlaufende Rille (24a, 24b, 24c, 40) ist, wobei die Vakuumpumpe (10) ferner einen Sicherungsring (42), angeordnet in der Rille (24a, 24b, 24c) des Gehäuses (12) und gleichzeitig einer Rille (40) des Bundes (34) zum Eingreifen der entsprechenden Positionierelemente, umfasst.

3. Vakuumpumpe nach Anspruch 1 oder 2, **dadurch gekennzeichnet, dass** der Bund (34) mindestens einen Satz und vorzugsweise mehr als einen Satz von Durchgangslöchern (36) zum Aufnehmen einer Schraube (38) zum Verbinden des Bundes (34) mit einer Vakuumvorrichtung umfasst.

4. Vakuumpumpe nach einem der Ansprüche 1 bis 3, **gekennzeichnet durch** einen Zentrierring (26), angeordnet am ersten Ende zwischen dem Gehäuse (12) und einer Vakuumvorrichtung (32).

5. Vakuumpumpe nach Anspruch 4, **dadurch gekennzeichnet, dass** der Zentrierring (26) in der axialen Richtung der Vakuumpumpe eine anpassbare Länge entsprechend der verbundenen Vakuumvorrichtung aufweist, sodass die Zentrierung für eine erste Vakuumvorrichtung eine erste axiale Länge aufweist, während die Zentrierung für eine zweite Vakuumvorrichtung eine zweite axiale Länge aufweist.

6. Vakuumpumpe nach Anspruch 4 oder 5, **dadurch gekennzeichnet, dass** der Zentrierring (26) sowohl mit dem Gehäuse (12) als auch der Vakuumvorrichtung (32) in direktem Kontakt ist.

7. Vakuumpumpe nach einem der Ansprüche 4 bis 6, **dadurch gekennzeichnet, dass** der Zentrierring (26) eine erste radiale Anlagefläche (28) umfasst, wobei die erste Anlagefläche (28) direkt am Gehäuse (12) anliegt, um eine mittlere Position zu definieren.

8. Vakuumpumpe nach Anspruch 7, **dadurch gekennzeichnet, dass** der Zentrierring (26) eine zweite radiale Anlagefläche (30) umfasst, die direkt an einer Vakuumvorrichtung (32) anliegt.

9. Vakuumpumpe nach Anspruch 8, **dadurch gekennzeichnet, dass** der Radius der ersten radialen Anlagefläche (30) vom Radius der zweiten radialen Anlagefläche (32) verschieden ist.

10. Vakuumsystem, umfassend eine Vakuumvorrichtung (32) und eine Vakuumpumpe (10) nach einem der Ansprüche 1 bis 9.

11. Vakuumsystem nach Anspruch 10, **dadurch gekennzeichnet, dass** zwischen dem ersten Ende (16) der Vakuumpumpe (10) und der Vakuumvorrichtung (32) ein Dichtungselement (44) platziert ist.

## Revendications

1. Pompe à vide destinée à être raccordée à un appareil à vide, comprenant
un carter (12) comportant une première extrémité (16) définissant un orifice d'entrée (14) et une seconde extrémité (20) opposée à la première extrémité (16),
un collier (34) à raccorder à un appareil à vide (32),
dans laquelle le carter (12) et le collier (34) comprennent chacun au moins un élément de positionnement (24a, 24b, 24c, 40) destiné à définir une position axiale du carter (12) par rapport au collier (34),
**caractérisée en ce que**
le carter (12) et/ou le collier (34) comprennent plus d'un élément de positionnement.

2. Pompe à vide selon la revendication 1, **caractérisée en ce que** l'élément de positionnement est une rainure circonférentielle (24a, 24b, 24c, 40), dans laquelle la pompe à vide (10) comprend en outre un anneau de retenue (42) disposé dans la rainure (24a, 24b, 24c) du carter (12) et une rainure (40) du collier (34) destinés à coopérer simultanément avec les éléments de positionnement respectifs.

3. Pompe à vide selon la revendication 1 ou la revendication 2, **caractérisée en ce que** le collier (34) comprend au moins un ensemble, et de préférence plus d'un ensemble, de trous traversants (36) destinés à recevoir une vis (38) pour raccorder le collier (34) à un appareil à vide.

4. Pompe à vide selon l'une quelconque des revendications 1 à 3, **caractérisée par** une bague de centrage (26) disposée au niveau d'une première extrémité entre le carter (12) et un appareil à vide (32).

5. Pompe à vide selon la revendication 4, **caractérisée en ce que** la bague de centrage (26) a une longueur adaptable dans la direction axiale de la pompe à vide en fonction de l'appareil à vide raccordé, de sorte que pour un premier appareil à vide, le centrage ait une première longueur axiale tandis que pour un second appareil à vide, le centrage ait une seconde longueur axiale.

6. Pompe à vide selon la revendication 4 ou la revendication 5, **caractérisée en ce que** la bague de centrage (26) est en contact direct avec l'un et l'autre du carter (12) et de l'appareil à vide (32).

7. Pompe à vide selon l'une quelconque des revendications 4 à 6, **caractérisée en ce que** la bague de centrage (26) comprend une première face de butée radiale (28), dans laquelle la première face de butée (28) est directement en butée contre le carter (12) pour définir une position centrale.

8. Pompe à vide selon la revendication 7, **caractérisée en ce que** la bague de centrage (26) comprend une seconde face de butée radiale (30) qui est directement en butée contre un appareil à vide (32).

9. Pompe à vide selon la revendication 8, **caractérisée en ce que** le rayon de la première face de butée radiale (30) est différent du rayon de la seconde face de butée radiale (32).

10. Système à vide comprenant un appareil à vide (32) et une pompe à vide (10) selon l'une quelconque des revendications 1 à 9.

11. Système à vide selon la revendication 10, **caractérisé en ce qu'**un élément d'étanchéité (44) est placé entre la première extrémité (16) de la pompe à vide (10) et l'appareil à vide (32).
